# EUROPEAN PATENT APPLICATION

(11) **EP 1 243 177 A2**
(43) Date of publication of application: **25.09.2002**
(21) Application number: 02380055.0
(22) Date of filing: 12.03.2002
(51) Int. Cl.: A01K 1/015

(54) **Grid floor**

(30) Priority: 19.03.2001 ES 200100635
(71) Applicant: Interlamas Siglo XXI, S.L., 31003 Pamplona (ES)
(72) Inventor: Itoiz Oroz, Alfonson, Urzainki,21, 3ro. izda., 31014 Pamplona (ES)
(74) Representative: Carpintero Lopez, Francisco

(57) **Abstract**

The floor is composed of a series of plates (3), of quadrangular shape and provided with rounded slots (4), which are installed resting on the lower inner flange (2) of a perimeter frame (1) and the side flanges (6) of a shape acting as a middle divider (5), these plates (3) having grooves (8) in two of the adjoining edges and shoulders (9) on the other two, complementary to one another to permit the matched jointing of said plates when they are installed on the frame (1), being secured in place by means of a finish cover (7) on the intermediate shape (5) and a lock plate (10) fitted on the edge corresponding to the frame (1), through which the plates (3) are inserted and removed. The grid floor obtained forms a surface for covering an empty space as well as a support to permit, for instance, the washing of a domestic animal by hand, so that the water and dirt pass through the slots with which the plates (3) are provided.

## Description

### OBJECT OF THE INVENTION

The present invention refers to a grid floor and more specifically to a platform forming the floor or tread surface applicable for covering an empty space, the platform being made up of a metal frame and a series of multiperforated plates that rest on the frame and are joined to one another so that they are perfectly secure and constitute the horizontal surface forming the platform or the actual floor.

It is the object of the invention to provide a new grid floor applicable in numerous fields or sectors of the market, such as for example, to form the floor of a cubicle for washing domestic animals by hand, just to mention one of its multiple applications, with frame, installation and use characteristics that offer a series of advantages in respect of other already known platforms or grid floors.

### PRIOR ART

Although grid floors or platforms forming a tread surface are amply known in a variety of uses and/or applications, the construction of grid floors on the basis of metal plates with holes for the passage of water and dirt present a series of problems and drawbacks that affect the installation, the actual constitution of the floor or platform and even its functional character.

In fact, conventional grid floors are sometimes made up of a single piece if the space to be covered is not excessively large, with the drawback that, if damaged, it has to be replaced as a whole, which involves a considerable financial expense.

In other cases, although the floor is made up of plates with holes or slots, they are assembled by simply laying them on a base structure consisting of cross rails all fastened to a perimeter frame, which means that the fit is not perfect and on one side it is too loose and on the other too tight, besides the fact that in the majority of cases the slots forming the actual grid are rectangular, which, in the event of using the platform or floor as a deck for washing domestic animals, they may get their hooves caught in these grids or even between the gaps appearing due to the incorrect placement of the plates, with the resultant harm that may be occasioned or caused to the animal.

Furthermore, in platforms or grid floors of this type, means are not known which, once the whole set of plates forming them are installed, assure their use so that they cannot come apart, although they may be dismantled at any time.

### DESCRIPTION OF THE INVENTION

The grid floor proposed by the invention overcomes the afore-mentioned problem by means of a series of innovations and improvements introduced into a structure based on the general concept referred to in the previous paragraph.

More specifically, the grid platform or floor of the invention is of the type formed of a series of plates with grooves which are installed alongside one another in a frame, so that on the basis of this general concept the grid floor of the invention presents a series of improvements and innovations that are set forth below.

First of all, one of the innovations presented by the grid floor is that the plates that are going to make up the support surface have their two largest faces, namely the upper and lower ones, exactly the same as each other, which means that the plate is symmetrical and may be used on either one side or the other, so that the plates may be positioned differently in order to produce different external configurations with regard to the surface formed by means of their appropriate arrangement.

Another novelty is that these slotted plates have a V-section groove on two of the adjacent sides and a complementary shoulder on the opposite two sides in order that the plates may be coupled laterally in the form of a matched joint.

Furthermore, the design of the plates is such that they are all quadrangular, with the same dimensions, and the slots are executed to form parallel alignments in the same direction always, with the result that, by virtue of the symmetry of both faces and the means of coupling by the afore-mentioned matched system, it is possible to install the plates with their slots in perpendicular directions to form different design arrangements since, although they are the same, they may be positioned at right angles to one another.

Another novelty is that the frame in which the above-mentioned plates are installed has an inner perimeter flange on its underside where the actual plates rest, with the special feature that this frame has an intermediate longitudinal member consisting of an inverted "T" shape, on which the horizontal flanges form the supports for the edges of the plates that are positioned on either side of the intermediate central divider, resting on the other edge on the opposite side of the frame lower flange.

Another novel feature is that the above-mentioned shape forming the middle divider of the frame is supplemented with a cover that acts as a finish element for the upper edge of said shape and which runs all along it, with the exception of one of its ends where the different plates making up the grid floor are inserted and removed.

The aforesaid finish element or cover installed on the shape making up the middle divider of the frame represents a means of fastening the plates once they are fitted, while this means of fastening is supplemented with another which secures the plates definitively to prevent them becoming detached, this latter means of fastening being composed of a lock plate that is fixed to the respective side of the frame shape where the plates are inserted and removed, said shape overlapping the upper edge of the last plate installed so that it is secured in its position, just like the others, thereby preventing the floor from coming apart.

Another innovative feature of the grid floor is that the slots in the plates are elongated but with ends with a rounded outline, with the result that this feature, combined with the fact that each plate is endowed with a suitable thickness, means that when they are used for existing floors or platforms, for instance in cubicles for washing domestic animals by hand, the hooves and legs of these are not harmed because the risk is eliminated of their getting trapped in the holes or slots in the plates.

### DESCRIPTION OF THE DRAWINGS

To supplement the description being given and in order to assist a clearer understanding of the features of the invention in accordance with a preferential example of practical embodiment of same, a set of drawings is adjoined, as an integral part of said description, wherein are represented, for informative but non-restrictive purposes, the following:
Figure 1.- It offers a plan view of a grid floor or platform executed in accordance with the object of the present invention, showing the perimeter frame, six grid plates, although these are represented merely by means of straight lines, and the means for fastening them in their installation position.
Figure 2.- It offers a sectional view corresponding to the cross-section line A-B in the previous figure, showing the perimeter frame as well as the lateral matched jointing between plates, and their support on the lower inner perimeter flange of the actual frame, whilst the lock plate may also be observed that is fitted to one of the sides of this frame to secure the last grid plate installed.
Figure 3.- It offers a sectional view corresponding to the cross-section line C-D in figure 1, showing the detailed drawing of the shape forming the middle divider of the frame, the support of the plates on the flanges of this middle divider and its upper finish cover for securing the actual plates in their installation position.
Figure 4.- It offers a close view of a corner of one of the plates represented in the foregoing figures, showing the configuration of the slots with which these plates are provided.
Figure 5.- It offers another sectional view corresponding to the cross-section line E-F in the previous figure, showing the rounding of the slots in the plate.
Figure 6.- It shows, lastly, the operational handling stages which have to be performed on a plate so that it may be arranged at right angles to another one adjacent to it.

### PREFERENTIAL EMBODIMENT OF THE INVENTION

As may be seen in the above-mentioned figures, the gridded floor or base platform of the invention is made up of frame (1), which is provided on its underside with an internal perimeter flange (2) forming a means of support for a series of plates (3) which are going to constitute the floor or support surface strictly speaking, plates (3) which are endowed with a large number of slots (4), as shown in the figure, the specific features of which will be explained below.

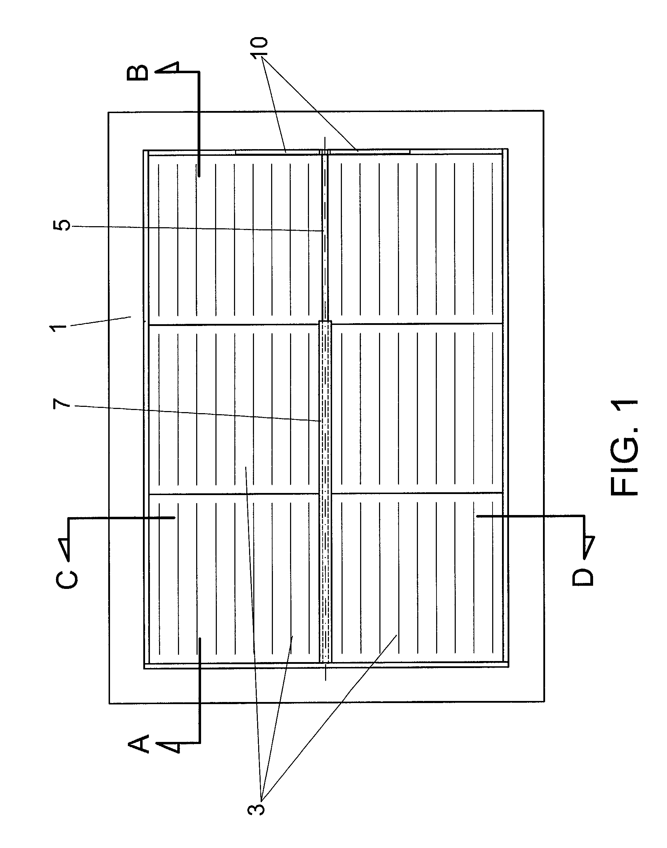

The frame (1) also presents an intermediate shape (5) forming a divider with a pair of side flanges (6) on the same plane as the lower flanges (2) of the frame (1), together forming the support for the actual plates (3). Said shape (5) forming the middle divider is finished at the top with a cover (7) situated all along the shape (5) with the exception of an end section, as represented in the figure 1.

For their part, besides the afore-mentioned slots (4), the plates (3) have two of their edges adjoining a V-shaped groove, complementary to a shoulder (9) provided on the other two adjoining sides, which means that, when installed on the frame (1), the plates (3) not only rest on its lower flange (2) and on the flanges (6) of the middle or lower shape (5), but they are also coupled to one another laterally by the matching of groove (8) and the complementary shoulder (9).

The afore-mentioned plates (3) are installed on the frame (1) one by one and from one end to the other, being slid in correlatively until successfully installing the last two, as represented in figure 1, so that, when fitted, all the plates (3) are secured by means of the cover (7) with which the shape is topped (5) and a lock plate (10), situated on the corresponding edge of the frame (1), through which the plates are inserted and obviously may be removed. These have a lock plate (10) which overlaps the upper plane of the frame (1), provided with an oblique flange facing inwards that forms the means for securing the end plates (3), thereby preventing the grid floor obtained from coming apart.

The plates (3) have the special feature that their two larger faces (3'-3") are exactly the same as each other, so that said plates (3) may be installed with either of their faces (3'-3") up or down.

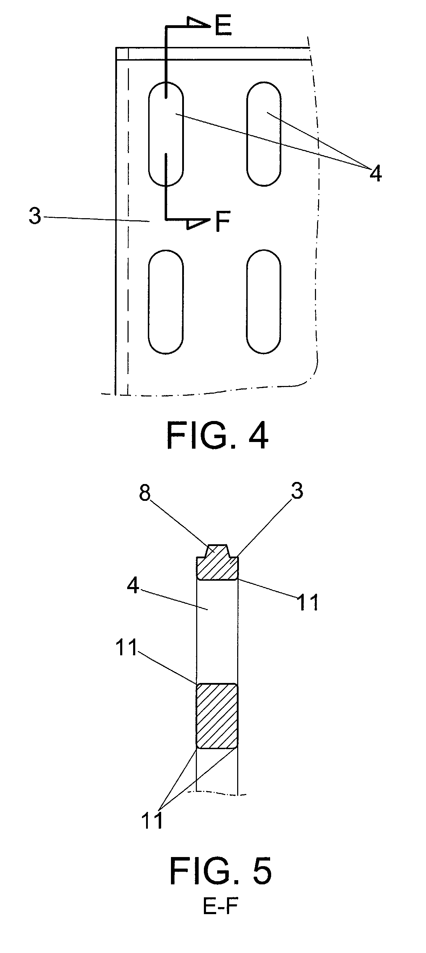

In addition, the elongated holes or slots (4) with which the plates (3) are provided, besides being equidistant, are finished with a rounded outline (1), as is clearly shown in the close view in figure 5, with the result that, since the plate (3) is of sufficient thickness, these roundings (11) of the holes or slots (4) prevent, for instance, the hooves or legs of the domestic animals that may be standing on a grid floor like the one described from being harmed through eliminating the risk of their getting trapped in the aforesaid slots (4) in the plates (3).

As has already been mentioned, when joined together, the plates (3) form a surface or base support platform offering the option of composing a varied geometry by changing the position of the former so that the slots (4) are arranged in different directions. In other words, the plates (3) may be placed so that they are all arranged with the holes (4) in the same direction, or else so that those on one side have their holes in one direction and those on the other side have their holes in a crosswise direction, or else with the plates (3) alternated with the holes or slots (4) either in a crosswise or normal direction in respect of the adjacent one.

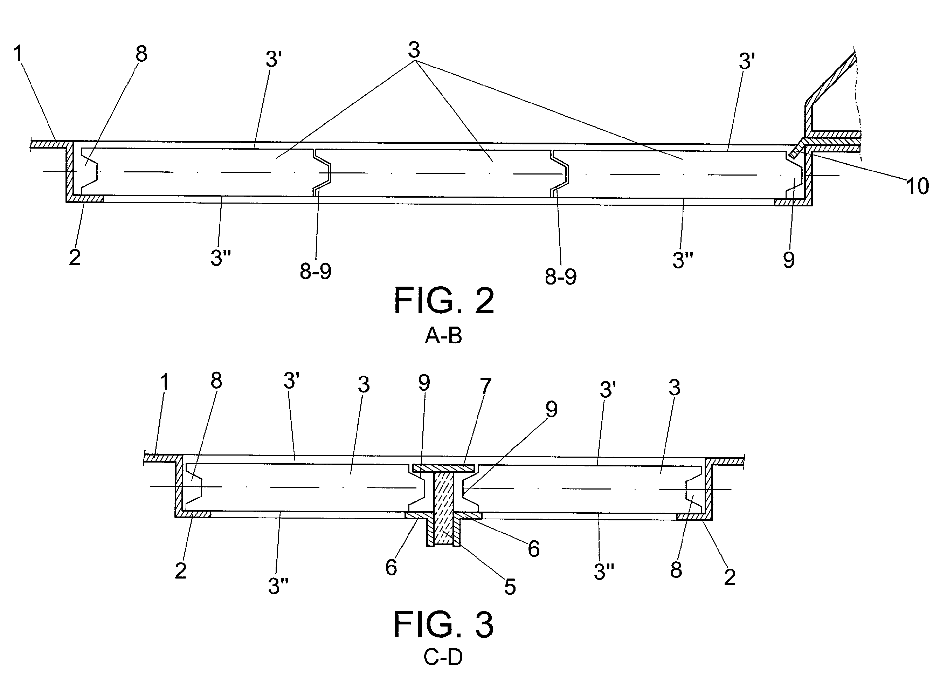

In the event of the plates (3) being installed with their slots or holes (4) all in the same direction, it will suffice to go on coupling these plates (3) by means of the matching between the V-grooved edge of one plate and the complementary V-shoulder of the adjacent plate, and so on. This layout means that on the sides corresponding to the frame (1), arranged on both sides of the central or middle shape (5), the shape corresponding to the edges of the plates is grooved (8), whereas the sides next to the middle shape (5) have shoulders (9), as may be seen clearly in figures 2 and 3.

If it is wished to place the plates (3) with their slots or holes (4) in a crosswise direction in respect of the previous and/or adjacent one, the way to proceed would be as follows:

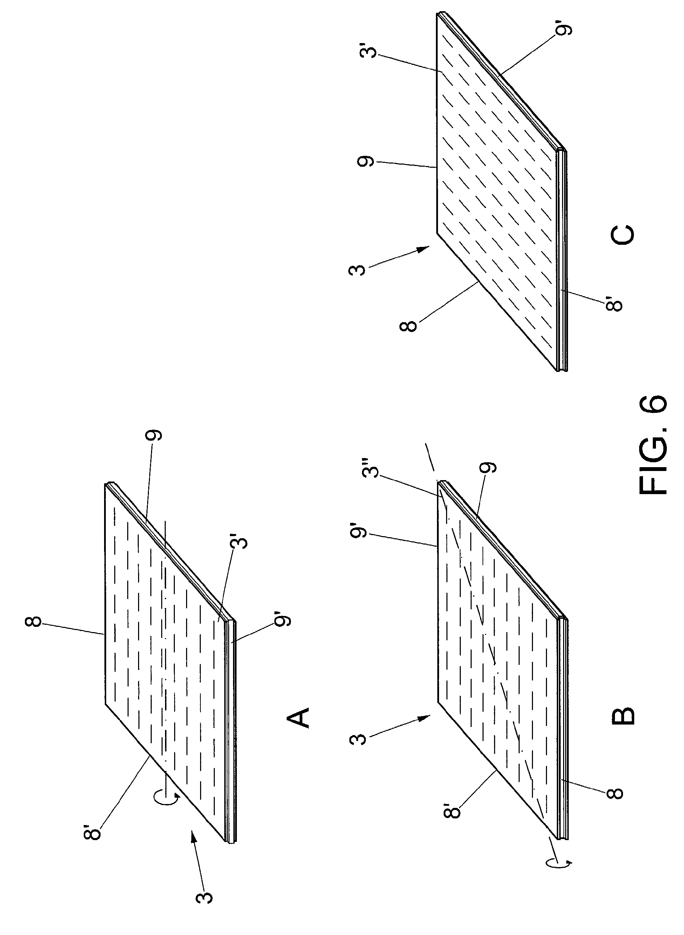

As may be observed in figure 6, starting from a plate (3) in the position shown as close view A, the shoulders (9) and (9') of two of the adjacent sides and the complementary grooves (8) and (8') of the other two sides are situated in one position.

However, if the plate (3) is turned 180° from that position corresponding to close view A, as is indicated by the arrow in said close view, then plate (3) occupies the position represented in close view B of that same figure 6, face (3'), which was situated at the top, now matches up with the bottom, whereas face (3"), which was the bottom one before, is now situated at the top, while the shoulders and grooves (9-9') and (8-8') are in the position represented as B.

If the plate is rotated 180° in respect of one of the diagonals starting from this position, which may be considered as the inverted and 180° turned position of the plate (3), as is indicated in that position B by the arrow, then the position of plate (3) is obtained as represented in C by turning the face (3') upwards and face (3") downwards, so that the shoulders and grooves are in the position that enables that plate to be coupled transversely with another adjacent one, so that when we say transverse it means with the slots (4) of one plate are transverse in respect of those of the adjoining one, with the result that the floor may be installed with the different configurations that may be so required with regard to the slots or holes (4) in the plates (3).

## Claims

1. Grid floor which, being designed to form a platform or surface to cover an empty space, for instance that defined in a cubicle for washing animals by hand, and being composed of a series of plates duly supported on a frame, the former provided with slots so as to act not only as a support, but also to permit the passage of liquid or dirt through the actual slots, is **characterised in that** the corresponding frame (1) has a lower inner perimeter flange (2) for supporting the corresponding plates (3), the former having an intermediate shape (5) forming a divider with lower horizontal flanges (6) which, in combination with the lower flange (2) of the frame (1), form the means of support for the respective plates (3), these being retained at the top, once fitted, by means of a cover (7) provided as an upper finish for the intermediate shape (5), a cover (7) which extends all along said shape (5) with the exception of an end section through which the plates (3) are installed on the frame (1), these being secured by means of an appendage to the shape in the form of a lock plate (19) situated at the corresponding edge of the frame through which the actual grid plates (3) are inserted and removed, while said plates (3) are designed so that two of their adjacent edges have grooves (8-8') complementary to respective shoulders (9-9') provided on the other two edges, forming means which permit the matched jointing of the plates (3), which have the special feature that both larger faces (3-3') are the same as each other, so that either of them may be installed facing upwards.

2. Grid floor, according to claim 1, **characterised in that** the slots (4) with which the plates (3) are provided have their ends and edges (11) fully rounded.

3. Grid floor, according to the previous claims, **characterised in that** the arrangement of the grooves (8-8') and shoulders (9-9') at the edges of the plates (3) and the symmetry of both faces (3-3') make it possible, by means of the corresponding turning or handling of said plates (3), to compose a varied geometry through the placement of said plates (3) with the alignments of the slots (4) of adjoining plates perpendicular to one another.
